# EUROPÄISCHE PATENTANMELDUNG

(11) **EP 1 850 442 A2**
(43) Veröffentlichungstag der Anmeldung: **31.10.2007**
(21) Anmeldenummer: 07006631.1
(22) Anmeldetag: 30.03.2007
(51) Int. Cl.: H02J 7/00

(54) **Vorrichtung zur Auf-und/oder Entladung eines elektrischen Energiespeichers**

(30) Priorität: 29.04.2006 DE 202006006936 U
(71) Anmelder: Hoppecke Technologies GmbH & Co. KG, 08056 Zwickau (DE)
(72) Erfinder:
(74) Vertreter: Stenger, Watzke & Ring

(57) **Zusammenfassung**

Die Erfindung betrifft eine Vorrichtung (1) zur Auf- und/oder Entladung eines elektrischen Energiespeichers (4), insbesondere eines Akkumulators. Um eine solche Vorrichtung zur Auf- und/oder Entladung eines elektrischen Energiespeichers weiterzuentwickeln wird mit dieser Erfindung eine Vorrichtung zur Auf und/oder Entladung eines elektrischen Energiespeichers, insbesondere eines Akkumulators, gekennzeichnet durch eine Einrichtung für die zufällige Vorgabe eines Auf und/oder Entladungsbeginns vorgeschlagen.

## Beschreibung

Die Erfindung betrifft eine Vorrichtung zur Auf- und/oder Entladung eines elektrischen Energiespeichers, insbesondere eines Akkumulators.

Eine Vorrichtung der gattungsgemäßen Art ist beispielsweise aus der DE 203 10 318 bekannt. Die hier beschriebene Vorrichtung verfügt zum einen über eine Anschlußeinrichtung zum Anschluß eines elektrischen Energiespeichers, beispielsweise eines Akkumulators, sowie zum anderen über einen Stromanschluß, welcher der Versorgung der Vorrichtung mit elektrischer Energie dient.

Obgleich sich die aus der DE 203 10 318 bekannte Vorrichtung zur Auf- und/oder Entladung eines elektrischen Energiespeichers dem Grunde nach im Praxiseinsatz bewährt hat, besteht nach wie vor Verbesserungsbedarf, insbesondere mit Blick auf die Netzbelastung im Betriebsfall.

Es ist daher die **Aufgabe** der Erfindung, eine gattungsgemäße Vorrichtung zur Auf- und/oder Entladung eines elektrischen Energiespeichers weiterzuentwickeln.

Zur technischen **Lösung** dieser Aufgabe wird mit der Erfindung eine Vorrichtung zur Auf- und/oder Entladung eines elektrischen Energiespeichers, insbesondere eines Akkumulators, vorgeschlagen, welche sich durch eine Einrichtung für die zufällige Vorgabe eines Auf- und/oder Entladungsbeginns auszeichnet.

Aus dem Stand der Technik vorbekannte Vorrichtungen zur Auf- und/oder Entladung eines elektrischen Energiespeichers verfügen in aller Regel über ein Bedienfeld, welches unter anderem dazu dient, eine Auf- und/oder Entladung eines an die Vorrichtung angeschlossenen Energiespeichers zu starten. Das Bedienfeld ist manuell zu betätigen, was sich bei einem gleichzeitigen Parallelbetrieb von mehreren Vorrichtungen in nachteiliger Weise als zeitaufwendig und umständlich herausgestellt hat. Aus dem Stand der Technik ist es darüber hinaus bekannt, daß Vorrichtungen zur Auf- und/oder Entladung eines elektrischen Energiespeichers mit einer Auf- und/oder Entladung automatisch beginnen, sobald ein aufzuladender und/oder zu entladender elektrischer Energiespeicher an diese angeschlossen wird. Insbesondere bei einem vorangegangenen Netzausfall, das heißt ein Ausfall der Stromversorgung für die Vorrichtungen zur Auf- und/oder Entladung eines elektrischen Energiespeichers beginnen sämtliche Vorrichtungen gleichzeitig mit einer Auf- und/oder Entladung der jeweils daran angeschlossenen elektrischen Energiespeicher. Zur Vermeidung dieses Nachteils wurde bereits vorgeschlagen, für mehrere im Parallelbetrieb arbeitende Vorrichtungen eine gemeinsame, das heißt zentrale Bedieneinrichtung vorzusehen, mittels welcher eine Auf- und/oder Entladung bezüglich sämtlicher Vorrichtungen gleichzeitig gestartet werden kann. Die manuelle Betätigung einer jeden einzelnen Vorrichtung entfällt damit in vorteilhafter Weise.

Von Nachteil einer zentralen Bedieneinrichtung ist jedoch, daß sämtliche daran angeschlossene Vorrichtungen zur gleichen Zeit mit einer Auf- und/oder Entladung beginnen, was zu einer ungewünschten Netzbelastung führen kann. Ein Vorschlag zur Überwindung dieses Nachteils ist bisher nicht bekannt geworden.

Mit der erfindungsgemäßen Vorrichtung wird nunmehr eine Einrichtung für die zufällige Vorgabe eines Auf- und/oder Entladungsbeginns vorgeschlagen. Die Bedienung mehrerer im Parallelbetrieb arbeitender Vorrichtungen kann nach wie vor über eine gemeinsame, das heißt zentrale Bedieneinrichtung erfolgen. Ein gleichzeitiger Auf- und/oder Entladungsbeginn kann aber vermieden werden, da eine jede Vorrichtung über eine Einrichtung für die zufällige Vorgabe eines Auf- und/oder Entladungsbeginns verfügt, so daß Netzbelastungen in vorteilhafter Weise gering gehalten werden können.

Die erfindungsgemäß vorgesehene Einrichtung für die zufällige Vorgabe eines Auf- und/oder Entladungsbeginns sorgt für eine zeitliche Verzögerung zwischen einem von einem Bediener zu gebenden Auf- und/oder Entladungsbefehl einerseits und dem tatsächlichen Start der durch den Auf- und/oder Entladungsbefehl initiierten Auf- und/oder Entladung andererseits. Dabei erfolgt diese zeitliche Verzögerung zufällig, so daß bei einem gleichzeitigen Parallelbetrieb von einer Mehrzahl von Vorrichtungen sichergestellt ist, daß nicht sämtliche Vorrichtungen zur gleichen Zeit mit einer Auf- und/oder Entladung beginnen.

Die erfindungsgemäß vorgesehene Einrichtung für die zufällige Vorgabe eines Auf- und/oder Entladungsbeginns verfügt gemäß einem weiteren Merkmal der Erfindung über einen Zufallsgenerator. Dieser stellt ein Zeitintervall von bevorzugterweise 3 bis 10 Sekunden bereit, innerhalb dessen der Beginn einer Auf- und/oder Entladung zufällig vorgebbar ist. Es können selbstredend auch andere Zeitintervalle vom Zufallsgenerator bereitgestellt werden. Entscheidend ist allein, daß bei einem gleichzeitigen Parallelbetrieb von mehreren Vorrichtungen nicht sämtliche Vorrichtungen zur gleichen Zeit mit einer Auf- und/oder Entladung beginnen.

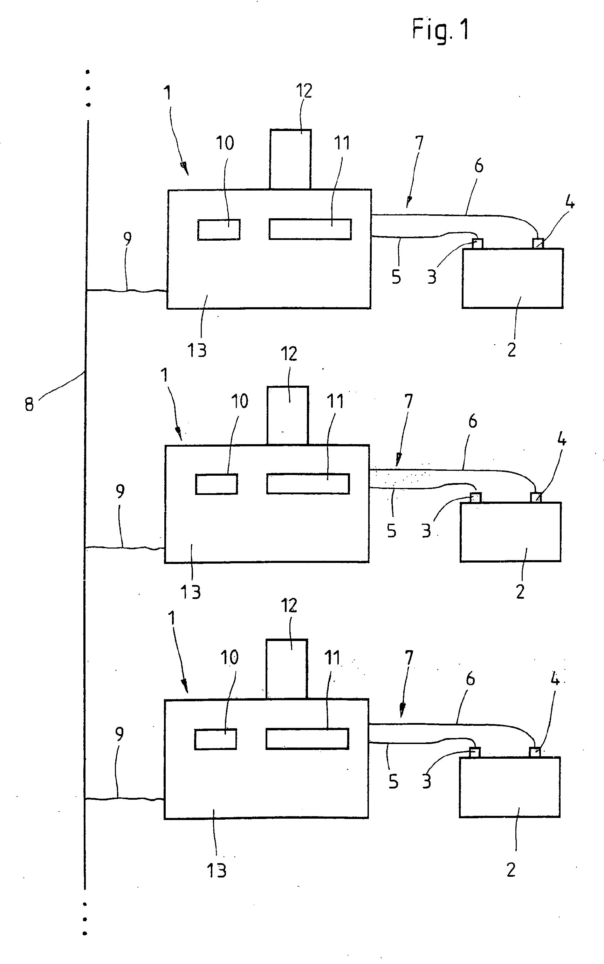

Weitere Merkmale und Vorteile der Erfindung ergeben sich aus der nachfolgenden Beschreibung anhand der einzigen Fig. 1, die in schematischer Darstellung den gleichzeitigen Parallelbetrieb von mehreren Vorrichtungen zur Auf- und/oder Entladung eines elektrischen Energiespeichers zeigt.

Fig. 1 zeigt in schematischer Darstellung eine Mehrzahl von Vorrichtungen 1 nach der Erfindung, die an eine gemeinsame Stromversorgung 8 angeschlossen sind und im Parallelbetrieb gleichzeitig arbeiten.

Fig. 1 zeigt insgesamt drei Vorrichtungen 1 zur Auf- und/oder Entladung eines elektrischen Energiespeichers. Dabei sind die Vorrichtungen 1 jeweils als Standgeräte ausgestattet. An diese sind jeweils ein elektrischer Energiespeicher in Form eines Akkumulators 2 angeschlossen. Zur elektrischen Kontaktierung dient jeweils eine aus zwei Kabeln 5 und 6 bestehende Anschlußeinrichtung 7, wobei jeweils das eine Kabel 5 an einen ersten Akkumulatorpol 3 und das jeweils andere Kabel 6 an einen zweiten Akkumulatorpol 4 eines jeweiligen Akkumulators 2 elektrisch angeschlossen sind. Die jeweils als Ladegeräte ausgebildeten Vorrichtungen 1 sind als solche mittels eines jeweiligen Stromanschlusses 9 an eine gemeinsame Stromversorgung 8 angeschlossen.

Die Vorrichtungen 1 verfügen jeweils über eine in den Fign. nicht dargestellte Einrichtung für die zufällige Vorgabe eines Auf- und/oder Entladungsbeginns. Diese Einrichtungen sind im jeweiligen Gehäuse 13 der Vorrichtungen 1 angeordnet.

Eine jede Einrichtung für die zufällige Vorgabe eines Auf- und/oder Entladungsbeginns verfügt über einen Zufallsgenerator, der ein Zeitintervall von vorzugsweise 3 bis 10 Sekunden bereitstellt, innerhalb dessen der jeweilige Beginn einer Auf- und/oder Entladung zufällig vorgebbar ist.

Die Vorrichtungen 1 lassen sich über eine zentrale Bedieneinrichtung ansteuern. Insbesondere kann der Ladestart sämtlicher Vorrichtungen 1 über die zentrale Bedieneinrichtung vorgegeben werden. Um aber zu vermeiden, daß sämtliche Vorrichtungen 1 tatsächlich zur selben Zeit mit einer Aufladung beginnen, verfügt eine jede Vorrichtung über die schon vorbeschriebene Einrichtung für die zufällige Vorgabe eines Auf- und/oder Entladungsbeginns. Damit wird sichergestellt, daß die Vorrichtungen 1 trotz des gemeinschaftlichen Ladestartbefehls nicht zur selben Zeit mit einer Aufladung beginnen. Ungewollte Netzbelastungen in der Stromversorgung 8 können so in vorteilhafter Weise vermieden werden.

Nach erfolgtem Ladestartbefehl beginnt eine jede Vorrichtung 1 innerhalb eines Zeitfensters von vorzugsweise 3 bis 10 Sekunden zufällig mit der gewünschten Aufladung. Trotz des gemeinschaftlich gegebenen Ladestartbefehls ergibt sich also eine zufällige Zeitverzögerung je Vorrichtung 1 zwischen Ladestartbefehl einerseits und tatsächlichem Ladestart andererseits.

Die in Fig. 1 gezeigten Vorrichtungen 1 verfügen frontseitig, das heißt mit Blickrichtung auf die Vorrichtungen 1 nach Fig. 1 jeweils über eine Anzeigeneinrichtung in Form eines Anzeigendisplays 10 sowie über ein Bedienfeld 11. Sowohl die Anzeigendisplays 10 als auch die Bedienfelder 11 sind jeweils mit Bezug auf die Blattebene nach Fig. 1 frontseitig der Vorrichtungen 1 zugänglich.

Die Vorrichtungen 1 verfügen des weiteren jeweils über eine optische Signaleinrichtung 12 zur Anzeige wenigstens einer Betriebszustandsgröße des an die jeweilige Vorrichtung 1 angeschlossenen Akkumulators 2. Mittels der jeweiligen Signaleinrichtung 12 wird vorzugsweise der Ladezustand des an die jeweilige Vorrichtung 1 angeschlossenen Akkumulators 2 wiedergegeben, wobei die jeweilige Signaleinrichtung 12 in Abhängigkeit des elektrischen Ladezustandes des jeweils angeschlossenen Akkumulators 2 farbig aufleuchtet.

Eine jede Signaleinrichtung 12 ist zylinderförmig ausgebildet und oberseitig des jeweiligen Gehäuses 13 einer Vorrichtung 1 an diesem angeordnet.

Die Besonderheit der vorbeschriebenen Signaleinrichtungen 12 besteht darin, daß sie jeweils um 360° um die zugehörige Vorrichtung 1 herum, das heißt aus allen vier Himmelsrichtungen von einem Benutzer wahrgenommen werden können. Damit sind die Signaleinrichtungen 12 nicht nur bei einer frontseitigen Ansicht der jeweiligen Vorrichtung 1 zu erkennen. Sie können vielmehr von einem Benutzer auch aus weiter Entfernung und aus jeder beliebigen Position relativ zur jeweiligen Vorrichtung 1 wahrgenommen werden.

Das Anzeigendisplay 10 einer jeden Vorrichtung 1 dient einem Benutzer beispielsweise zur detaillierten Anzeige im besonderen dargestellter Betriebszustandsgrößen. So kann mittels des Anzeigendisplays 10 beispielsweise der Ladestrom, die Ladespannung oder die Ladetemperatur des an die jeweilige Vorrichtung 1 angeschlossenen Akkumulators 2 angezeigt werden. Zudem ist es möglich, die noch verbleibende Restlaufzeit eines Ladevorganges anzuzeigen, auch mittels grafischer Symbole.

Das Bedienfeld 11 einer jeden Vorrichtung 1 dient der Eingabe von benutzerseitig frei vorgebbaren Ladeparametern. So kann beispielsweise über das Bedienfeld 11 die Ladespannung, der Ladestrom oder die Ladezeit vorgegeben werden. Alternativ zu einer Bedienung einer Vorrichtung 1 über das Bedienfeld 11 kann auch die Verwendung einer Computereinrichtung, beispielsweise in Form eines PCs vorgesehen sein. Die Computereinrichtung steht vorzugsweise über eine USB-Schnittstelle in kommunikationstechnischer Verbindung mit der Vorrichtung 1, so daß mittels der Computereinrichtung benutzerseitig frei vorgebbare Ladeparameter gewählt bzw. eingestellt werden können.

### Bezugszeichenliste

- 1: Vorrichtung
- 2: Akkumulator
- 3: Akkumulatorpol
- 4: Akkumulatorpol
- 5: Kabel
- 6: Kabel
- 7: Anschlußeinrichtung
- 8: Stromversorgung
- 9: Stromanschluß
- 10: Anzeigendisplay
- 11: Bedienfeld
- 12: Signaleinrichtung
- 13: Gehäuse

## Patentansprüche

1. Vorrichtung zur Auf- und/oder Entladung eines elektrischen Energiespeichers, insbesondere eines Akkumulators, **gekennzeichnet durch** eine Einrichtung für die zufällige Vorgabe eines Auf- und/oder Entladungsbeginns.

2. Vorrichtung nach Anspruch 1, **dadurch gekennzeichnet, daß** die Einrichtung über einen Zufallsgenerator verfügt.

3. Vorrichtung nach Anspruch 1 oder 2, **dadurch gekennzeichnet, daß** der Zufallsgenerator ein Zeitintervall von 3 bis 10 Sekunden bereitstellt, innerhalb dessen der Beginn einer Auf- und/oder Entladung zufällig vorgebbar ist.
